# EUROPEAN PATENT SPECIFICATION

(11) **EP 3 896 308 B1**
(45) Date of publication and mention of the grant of the patent: **15.11.2023**
(21) Application number: 19897121.0
(22) Date of filing: 25.03.2019
(51) Int. Cl.: F16D 65/18, B60T 13/74, F16D 65/56, F16D 121/24, H02K 13/00

(54) **ELECTRONIC PARKING BRAKE ACTUATOR ASSEMBLY**
AKTUATORBAUGRUPPE FÜR ELEKTRONISCH FESTSTELLBREMSE
ENSEMBLE D'ACTIONNEURS DE FREIN DE STATIONNEMENT ÉLECTRONIQUE

(30) Priority: 12.12.2018 KR 20180159700
(43) Date of publication of application: 20.10.2021
(73) Proprietor: Keyang Electric Machinery Co., Ltd., Seoul 06178 (KR)
(72) Inventor: LEE, Seong Oh, Ansan-si Gyeonggi-do 15451 (KR); JANG, Su Gil, Cheonan-si Chungcheongnam-do 31163 (KR); GO, Bong Guk, Siheung-si Gyeonggi-do 14995 (KR); HWANG, Seung Wook, Gyeonggi-do 13919 (KR)
(74) Representative: Stöckeler, Ferdinand
(86) International application number: PCT/KR2019/003459
(87) International publication number: WO 2020/122325

(56) References cited:
- DE-U1-202017 104 469
- JP-A- 2008 061 424
- KR-A- 20130 071 256
- KR-A- 20130 143 554
- KR-A- 20150 007 627
- KR-A- 20180 061 540
- KR-B1- 101 321 719
- KR-B1- 101 867 561

## Description

### Technical Field

The present invention relates generally to an actuator assembly which performs the operation of an electronic parking brake. More particularly, the present invention relates to an electronic parking brake actuator assembly in which a stator, a motor, and gears are assembled directly with a housing.

### Background Art

An electronic parking brake actuator of a vehicle is intended to operate a friction pad installed on a caliper of a disc brake device during parking. The electronic parking brake actuator is automatically operated by switch manipulation by a user using an electronic parking brake. To this end, the electronic parking brake actuator consists of a motor and a gear assembly (a power transmission device) to transmit the power of the motor.

As for how the electronic parking brake is used, when a driver depresses a parking brake switch, the rotational force of the motor of the actuator is transmitted to an input shaft of the caliper through the gear assembly (the power transmission device) such as a reduction gear. When the input shaft receiving the rotational force rotates, a press connection sleeve advances. Due to the advancement of the press connection sleeve, a piston which houses the press connection sleeve and a caliper housing move in directions approaching each other. Furthermore, a friction pad mounted to the piston and the caliper housing, respectively, presses and restrains each of the opposite surfaces of a disc such that the disc does not rotate, so the parking of a vehicle is performed.

Such an actuator is made through a complex assembly process. For example, parts constituting a motor are assembled with each other to make a motor assembly, and multiple gears are assembled with each other to make the gear assembly, and next, each of the motor assembly and the gear assembly is assembled with a separate housing and thus the actuator is made. Alternatively, multiple gears may be assembled directly with a housing.

However, in the case of such a conventional actuator, the number of parts constituting the actuator is great, so assembly man-hours increase. Accordingly, assemblability of the actuator is decreased and manufacturing costs thereof are increased, and further, there is limitation in decreasing the size of the actuator. Depending on a type of a vehicle, the required specification of the actuator may be changed. As the size of the actuator increases, the degree of freedom in design due to such specification change inevitably decreases.

Meanwhile, the actuator is composed of multiple rotating parts, and the rotating parts are engaged with each other to be rotated, so tolerance management thereof is important. This is because if distances between the centers of the rotating shafts of the rotating parts are out of an allowable range due to cumulative tolerance between the rotating parts, quality problems such as performance degradation or noise generation may occur. Particularly, the vibration of the motor generated during operation leads to vibration of parts such as gears due to the cumulative tolerance, which lowers the durability of the gears, so the durability of the product is decreased.

When assembling each component such as a built-in motor and gear, precise alignment between the shafts is difficult. Particularly, the gear assembly (or a gearbox) for a reduction function is configured as a part separate from the motor assembly, so the arrangement of the shafts of the parts spaced apart from each other is further difficult.

DE 20 2017 104469 U1 relates to actuator technology, and includes a transmission plate is integrally formed on the brush carrier, in particular monolithically, to form a carrier unit, which comprises at least one first bearing seat for receiving a first bearing axis of a first gearwheel of the first transmission stage, said gearwheel meshing with the first pinion fixed to the shaft.

KR 2015 0007627 A relates to actuator technology, and includes (i) a plurality of planetary gear parts that are meshed externally to the sun gear part and rotated around the planetary gear shaft part provided in the output shaft part, and (ii) a ring gear part that is meshed so that the planetary gear part is in internal contact and integrally formed with the case part.

### Disclosure

### Technical Problem

The present invention has been made keeping in mind the above problems occurring in the prior art, and the present invention is intended to propose an electronic parking brake actuator assembly in which a motor and multiple gears may not be preassembled with each other as a separate assembly but may be assembled directly with a housing of an actuator.

In addition, the present invention is intended to propose an electronic parking brake actuator assembly in which the gears constituting an actuator assembly may be assembled directly with the housing of the actuator to decrease assembly tolerance and improve the arrangement of shafts.

### Technical Solution

In order to accomplish the above objectives, according to one aspect of the present invention, the present invention provides an electronic parking brake actuator assembly including: a main housing constituted by a motor mounting part and a gear mounting part integrated with each other; a motor part assembled with the motor mounting part of the main housing; a gear part assembled with the gear mounting part of the main housing and rotated in engagement with the motor part by a rotational force of the motor part; and a cover assembled with the main housing and shielding the motor part and the gear part, wherein a brush card assembly is assembled directly with the motor mounting part, a terminal constituting the brush card assembly being insert-injected into the motor mounting part.

The brush card assembly may include: a brush holder assembled with the motor mounting part; a brush movably inserted to the brush holder and elastically supported by an elastic member in a direction toward a commutator of the motor part; and the terminal insert-injected into the motor mounting part and transmitting external power to the brush.

The brush holder and the brush may be installed in a lower installation space located at a lower side of the motor mounting part, and the motor part may be assembled directly with the motor mounting part at a center of the lower installation space, so the commutator of the motor part may be located to face the brush.

The terminal may include: a connection part having at least a portion thereof exposed to the connector of the motor mounting part so as to receive external power; a body part connected to the connection part and located inside the motor mounting part; and a protruding part bent from the body part and exposed to an outer side of the motor mounting part such that the protruding part is connected to a choke coil, wherein the connection part, the body part, and the protruding part may be integrated with each other such that the external power is directly transmitted to the brush.

The gear part may rotate by receiving the rotational force of the motor part and may perform a deceleration function through multiple gears, wherein at least a portion of the gear part may be insert-injected into the gear mounting part to be fixed thereto.

The gear part may include: a drive gear integrated with the gear mounting part by surrounding an inner surface of the gear mounting part or assembled with the gear mounting part after the drive gear is made as a separate part; and multiple planetary gears configured to operate in contact with an inner surface of a ring gear.

The main housing may include: a frame part extending horizontally; the motor mounting part formed at a side of the frame part and allowing the motor part to be assembled therewith inside the motor mounting part; and the gear mounting part formed at a side opposite to the motor mounting part of the frame part, the gear mounting part extending in a direction parallel to the motor mounting part and allowing the gear part to be mounted thereto.

### Advantageous Effects

As described above, an electronic parking brake actuator assembly of the present invention may have the following effects.

In the present invention, the motor part and the gear part may not be preassembled with each other, but may be assembled directly with the main housing. This is possible since a structure for assembling the motor part and the gear part with the main housing is made in the main housing. Accordingly, the number of the parts of an actuator and assembly man-hours thereof may be decreased, thereby decreasing the manufacturing costs of the actuator.

Particularly, in the present invention, when the brush card assembly is mounted directly to the main housing and the motor part is fitted to the main housing, the brush card assembly and the motor part may be naturally assembled with each other. Accordingly, the assembly process of the motor part may be very simple, thereby lowering assembly difficulty.

In addition, in the present invention, the terminal constituting the brush card assembly may be insert-injected into the main housing to be integrated therewith, and a terminal connected to the outside and a terminal connected to the brush may be configured as one part, so the entire structure of the actuator may be simple. Particularly, the welding of the two terminals to each other may be omitted. Furthermore, the flow of an electric current may be prevented from being changed due to a welding result, so the operation reliability of a motor may be increased.

Furthermore, in the present invention, the gear part of the actuator assembly may be assembled directly with the main housing and at least a portion of the gear part may be insert-injected into the main housing to be prefixed thereto, so assembly tolerances between parts may be reduced, and due to the reduced assembly tolerance, the shaking or noise generation of the parts caused by rotational force supplied through a final output shaft may be decreased, thereby improving the quality of the actuator assembly.

In addition, in the present disclosure, a portion of parts may be insert-injected into the main housing, and the motor part and the gear part may be assembled directly with the main housing without a separate housing, so the entire size of the actuator may be decreased. Accordingly, the degree of freedom of design may be relatively large when changing the specification of the actuator assembly, thereby improving compatibility thereof.

### Description of Drawings

FIG. 1 is a perspective view illustrating an electronic parking brake actuator assembly according to an embodiment of the present invention.
FIG. 2 is an exploded perspective view of the electronic parking brake actuator assembly of FIG. 1.
FIG. 3 is a perspective view illustrating the configurations of a motor part and a brush card assembly constituting the electronic parking brake actuator assembly of the present invention.
FIG. 4 is a perspective view illustrating the configuration of the brush card assembly constituting the electronic parking brake actuator assembly of the present invention.
FIG. 5 is a perspective view illustrating the bottom sides of a motor mounting part and a gear mounting part of a main housing constituting the electronic parking brake actuator assembly of the present invention.
FIG. 6 is a perspective view illustrating the configuration of a terminal constituting the electronic parking brake actuator assembly of the present invention.
FIG. 7 is a perspective view illustrating a state in which a gear part is assembled with the main housing constituting the electronic parking brake actuator assembly of the present invention.

### Mode for Invention

Hereinafter, an embodiment of the present invention will be described in detail through exemplary drawings. In adding reference numerals to components of each drawing, it should be noted that the same components have the same numerals as possible even if they are indicated on different drawings. In addition, in describing the embodiment of the present invention, when it is determined that a detailed description of a related known configuration or function interferes with the understanding of the embodiment of the present invention, the detailed description thereof will be omitted.

In addition, in describing the components of the embodiment of the present invention, terms such as first, second, A, B, (a), (b) may be used. These terms are only for distinguishing the components from other components, and the nature, order, or order of each of the components is not limited by the term. When a component is described as being "connected" or "coupled" to another component, the component may be directly connected or coupled to the another component, but it should be understood that still another component may be "connected" or "coupled" to each of the components therebetween.

In the electronic parking brake actuator assembly (hereinafter referred to as "an actuator") of the present invention, large rotational force may be generated by decelerating the operation of the motor and may be transmitted to the outside to perform the function of the electronic parking brake. To this end, a motor part 20 and a gear part 70 composed of multiple gears may be installed in the actuator assembly of the present invention. The motor part 20 to be described later may indicate an electric motor including a stator and a rotor, and the gear part 70 may indicate an entire structure composed of multiple gears.

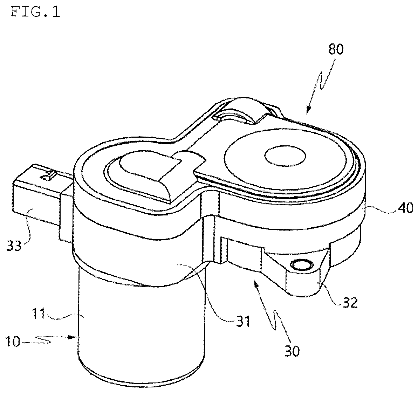

First, referring to FIG. 1, the actuator may have an entire exterior frame thereof constituted by a main housing 30 and a cover 80 coupled to each other. When the main housing 30 and the cover 80 are coupled to each other, a shielded installation space may be defined therein, and multiple parts may be provided in the installation space such that the actuator is operated. When the main housing 30 and the cover 80 are assembled with each other, a connector 33 and only a portion of a final output shaft of the gear part 70 to be described later may be exposed to the outside, and the remaining parts provided inside the installation space may not be exposed to the outside. A corresponding connector (not shown) corresponding to the connector 33 may be inserted to the coupling space of the connector 33.

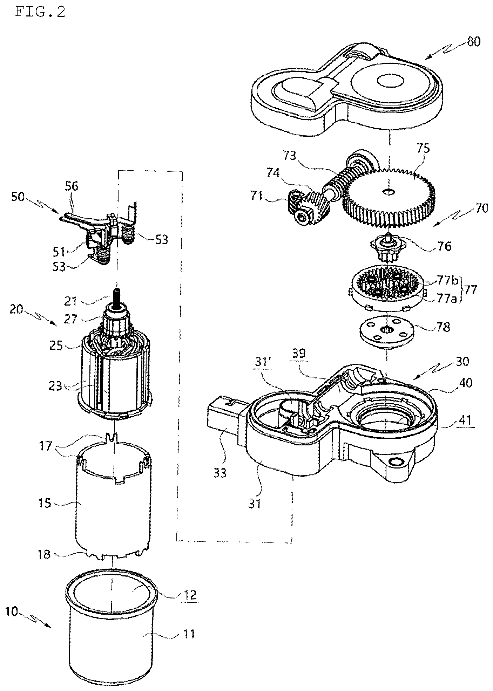

As for the configuration of the main housing 30, as illustrated in FIGS. 1 and 2, the main housing 30 may include a motor mounting part 31 and a gear mounting part 40 installed by being divided therein relative to a frame (no reference numeral). Here, the motor mounting part 31 and the gear mounting part 40 may be arranged in sections, respectively, divided in one main housing 30, and may have a rotating shaft 21 and a gear shaft, respectively, arranged in directions parallel to each other. The main housing 30 may be configured as one component, and in embodiment, may be made by injection molding synthetic resin. The detailed structure of the main housing 30 will be described again below.

The cover 80 may be assembled with the upper side of the main housing 30, and a motor cover 10 may be coupled to a side of the motor mounting part 31. The motor cover 10 may cover the exterior of the motor part 20 to be described later such that the motor part 20 is not exposed to the outside. The frame of the motor cover 10 may be constituted by a cover body 11 having an approximate cylindrical shape, and a motor installation space 12 may be defined inside the motor cover 10. A motor casing 15 may be located between the motor cover 10 and the motor part 20. The motor casing 15 may be coupled to the motor part 20 by covering the motor part 20. An upper assembly part 17 located at the upper end of the motor casing 15 may be held in and mounted to the motor mounting part 31 of the main housing 30 to be described later, and a lower assembly part 18 located at the lower end of the motor casing 15 may be held in and mounted to the lower side of the motor part 20.

Next, the motor part 20 will be described. The motor part 20 may be a structure including the stator 23 and the rotor 25 rotating relative to each other. In FIG. 2, the stator 23 and the rotor 25 are illustrated to be in close contact with each other. The stator 23 and the rotor 25 may rotate relative to each other, and more specifically, the rotor 25 located in the stator 23 which is a fixed permanent magnet may rotate relative to the stator 23. To this end, external power may be supplied to the rotor 25 such that electrical energy thereof is converted to rotational energy. For reference, the stator 23 may be located at the inner surface of the motor cover 10 described above, but to clearly show the structure of the stator 23, the stator 23 is illustrated to surround the rotor 25 in FIG. 2.

The rotor 25 located inside the stator 23 may rotate. When the rotor 25 rotates, the rotating shaft 21 may rotate with the rotor, and may transmit the rotational force thereof to the gear part 70. The rotating shaft 21 may be coupled to the center of the rotor 25, so the rotating shaft 21 may be considered as a rotating center of the rotor. The frame of the rotor 25 may be constituted by a core, and the core may be considered to have an approximate cylindrical shape surrounding the periphery of the rotating shaft 21 with the rotating shaft 21 placed at the center of the core. A coil may be wound on the core to constitute the rotor 25.

A commutator 27 may be coupled to the upper side of the rotor 25. The commutator 27 may be intended to change the direction of a current flowing through the coil, and may be considered as a component included in the rotor 25. The commutator 27 may be coupled to the rotating shaft 21, and may rotate with the core. While the commutator 27 rotates relative to the rotating shaft 21, the commutator 27 may be in discontinuous contact with a brush 52 of a brush card assembly 50 to be described later to be electrically connected thereto.

Looking back at the main housing 30, as illustrated in FIG. 2, the motor mounting part 31 with which the motor part 20 is assembled may be provided at a side of the main housing 30, and the gear mounting part 40 to which the gear part 70 is mounted may be provided at another side of the main housing 30. A shaft hole 31' through which the rotating shaft 21 protrudes may be formed at the center of the motor mounting part 31, and the connector 33 may be provided at a side of the motor mounting part 31. The connector 33 may be a part configured to receive external power. A connection part 56a of a terminal 56 to be described later may be exposed to the inside of the connector 33, and may be electrically connected to a terminal of the corresponding connector (not shown).

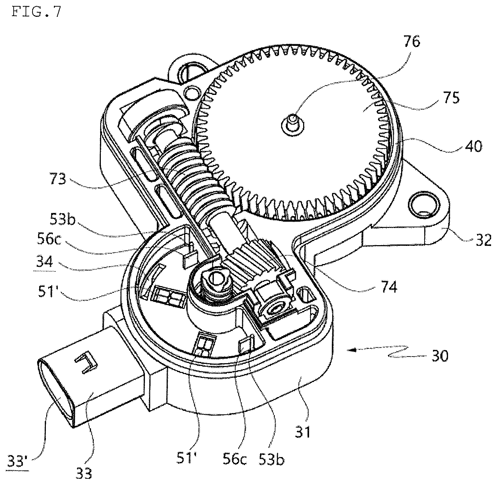

Referring to FIG. 7, an assembly hole 34 may be formed in the motor mounting part 31 of the main housing 30. The assembly hole 34 may be formed through the motor mounting part 31. The upper assembly part 17 of the motor casing 15 may be held in the assembly hole 34. A total of three upper assembly parts 17 may be formed at the motor casing 15, and three assembly holes 34 may be formed in the motor mounting part 31 and at positions corresponding to upper assembly parts 17. When the upper assembly part 17 passes through the assembly hole 34 and is bent in an outward direction, the upper assembly part 17 may be maintained to be held in the assembly hole 34.

A gear groove 39 in which a first reduction means 73 and 74 is installed may be formed between the motor mounting part 31 and the gear mounting part 40 by extending therebetween. The gear groove 39 may be considered as a portion of the gear mounting part 40. The first reduction means 73 and 74 may be inserted to the gear groove 39 to be rotated.

The motor part 20 described above may be fitted to the motor mounting part 31 from a lower side thereof. When the motor part 20 is fitted to the motor mounting part 31, the commutator 27 of the motor part 20 may be naturally assembled with the brush card assembly 50. To this end, the brush card assembly 50 may be mounted to the motor mounting part 31 to be integrated therewith. That is, the brush card assembly 50 may be mounted directly to the motor mounting part 31 of the main housing 30.

The brush card assembly 50 may function to transmit power to the motor part 20. To this end, the brush card assembly 50 may be located between the connector 33 and the commutator 27. In this case, the brush card assembly 50 may be assembled integrally with the motor mounting part 31, so a separate housing or casing for installing the brush card assembly 50 may not be required. That is, the motor part 20, the gear part 70, and the brush card assembly 50 may all be assembled with the main housing 30 at once.

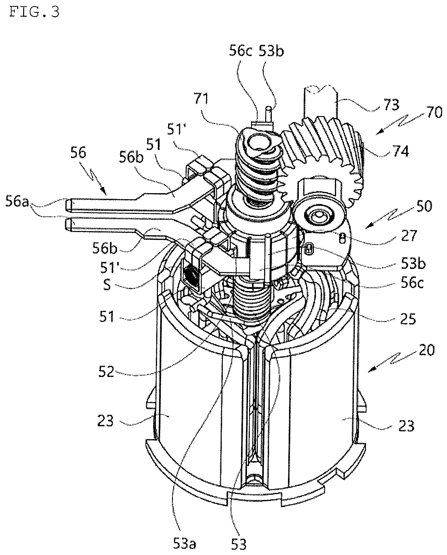

The configuration of the brush card assembly 50 assembled directly with the main housing 30 will be described. As illustrated in FIGS. 2 and 3, the brush card assembly 50 may include a brush holder 51, the brush 52, the choke coil 53, and the terminal 56. Here, the brush holder 51, the brush 52, the choke coil 53, and the terminal 56 may be mounted directly to the motor mounting part 31 of the main housing 30. The terminal 56 may be inserted into the main housing 30 to be integrated therewith by an insert injection method in a process in which the main housing 30 is manufactured.

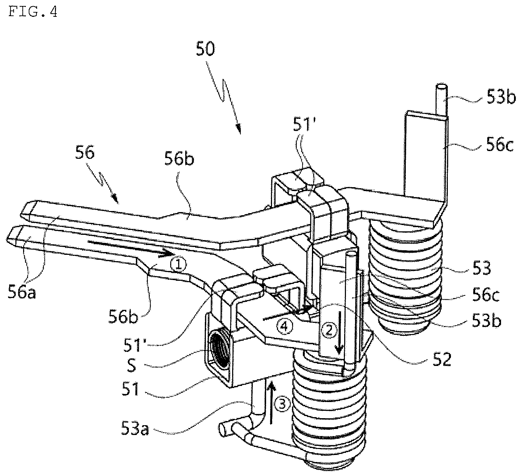

The brush holder 51 may be assembled with the motor mounting part 31 and may be made of metal. The brush holder 51 may have the brush 52 therein and may have space in which the brush 52 can move. A bent part 51' located at an end portion of the brush holder 51 may be bent after passing through the motor mounting part 31 such that the brush holder 51 may be fixed to the motor mounting part 31. For reference, in FIGS. 3 and 4, the bent part 51' of the brush holder 51 is illustrated to be bent, but before the bent part 51' passes through the motor mounting part 31, the bent part 51' may be straightened.

The brush 52 may be movably inserted to the brush holder 51 and may be elastically supported by an elastic member S in a direction toward the commutator 27 of the motor part 20. The elastic member S may be located at a relatively rear side inside the brush holder 51, and when the brush holder 51 is assembled with the motor mounting part 31, an end of the brush holder 51 may be supported by the inner surface of the motor mounting part 31.

The brush 52 may be electrically connected to the commutator 27 while being selectively in contact therewith, and in the process, may supply electric current to the commutator 27. The choke coil 53 may be connected to the brush 52, and may function to connect the brush 52 to the terminal 56 therebetween. That is, the choke coil 53 may be electrically connected to the terminal 56, and may function to supply electric current supplied from the terminal 56 to the brush 52. In the embodiment, a first end part 53a of the choke coil 53 may be connected to the brush 52, and a second end part 53b of the choke coil 53 may be spot-welded to the terminal 56. To this end, a protruding part 56c of the terminal 56 and the second end part 53b of the choke coil 53 may protrude to the upper side of the motor mounting part 31 and may be spot-welded to each other. This is illustrated in FIG. 7.

As a result, in the brush card assembly 50, power is supplied through the following path. Power may be supplied consecutively to the terminal 56, the choke coil 53, the brush 52 mounted to the brush holder 51, the commutator 27, and to a coil wound on a core of the motor part 20 so as to rotate a motor.

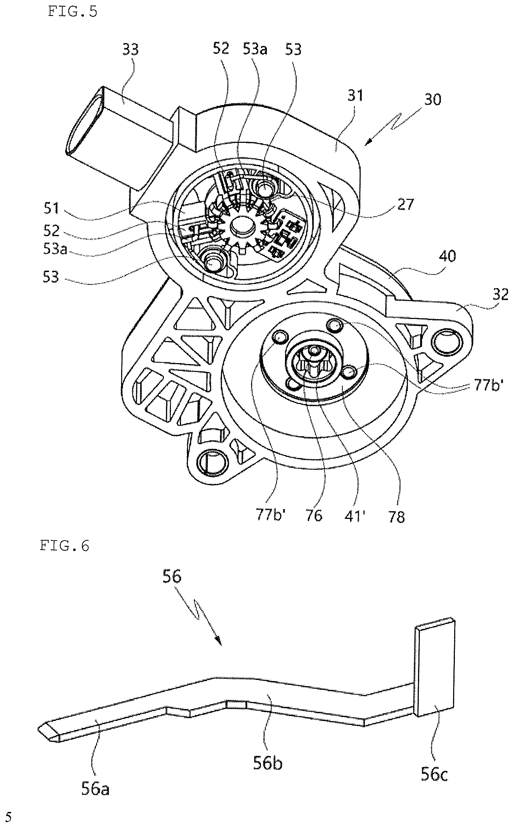

Referring to FIG. 5, in the present invention, the brush holder 51 and the brush 52 may be installed in lower installation space located at the lower side of the motor mounting part 31. The motor part 20 may be directly assembled with the motor mounting part 31 at the center of the lower installation space, and thus the commutator 27 of the motor part 20 may be located to face the brush 52. That is, the motor part 20 and the brush card assembly 50 may all be assembled with one main housing 30, so during the assembly of the motor part 20, the motor part 20 and the brush card assembly 50 may also be naturally assembled with each other.

Meanwhile, in the present invention, the terminal 56 of the brush card assembly 50 may be insert-injected to the motor mounting part 31. As for the structure of such a terminal 56, the terminal 56 may largely include the connection part 56a, a body part 56b, and the protruding part 56c. Here, the connection part 56a may have a portion thereof exposed to the inner space 33' of the connector 33 of the motor mounting part 31 such that the connection part 56a receives the external power. Accordingly, the connection part 56a may be connected to a corresponding terminal of the corresponding connector.

In addition, the body part 56b of the terminal 56 may be a part connected to the connection part 56a and located inside the motor mounting part 31. The body part 56b may be considered as a part provided in the main housing 30 by being insert-injected thereinto. Since the body part 56b may be firmly fixed to the main housing 30 by being insert-injected thereto, the terminal 56 may not be required to go through a separate assembly process.

The protruding part 56c of the terminal 56 may be a part exposed to an outer side of the motor mounting part 31 by being bent from the body part 56b so as to be connected to the choke coil 53. Accordingly, in the present invention, the terminal 56 may be insert-injected into the main housing 30 to be integrated therewith, and the terminal 56 connected to the outside and the terminal 56 connected to the brush 52 may not be configured as separate parts, but may be configured as one part, so the entire structure of the actuator may be simple, and particularly, the welding of the two terminals 56 to each other may be omitted. Furthermore, the connection part 56a, the body part 56b, and the protruding part 56c of the terminal 56 may be configured to be integrated therewith, and thus may be insert-injected into the main housing 30 to be fixed thereto. Additionally, the flow of an electric current may be prevented from being changed due to a welding result, so the operation reliability of the motor may be increased.

Next, as for the gear part 70, the gear part 70 may rotate by receiving the rotational force of the motor part 20, and may perform a deceleration function through multiple gears. At least a portion of the gear part 70 may be insert-injected into the gear mounting part 40 to be fixed thereto. For example, a bearing of the gear part 70 (not shown) may be insert-injected into the gear mounting part 40 of the main housing 30.

As for the configuration of the gear part 70, the gear part 70 may include: the first reduction means 73 and 74 composed of a motor gear 71 fitted over the rotating shaft 21 of the motor part 20, an idle gear 74, and a worm gear 73; a drive gear 75; and a planetary gear assembly which is a second reduction means. Here, the motor gear 71 may be considered as a part of the motor part 20. The idle gear 74 of the first reduction means 73 and 74 may be engaged with the motor gear 71 to change a rotating direction of the motor gear 71, which may cause first deceleration. Furthermore, the worm gear 73 may be engaged with the drive gear 75. The worm gear 73 and the drive gear 75 may be considered as a worm and a worm wheel. When the worm gear 73 is engaged with the drive gear 75, the rotating direction of the worm gear 73 may be changed and a second deceleration may be realized.

The planetary gear assembly rotating in engagement with the drive gear 75 may be composed of a sun gear 76, planetary gears 77b, and a carrier 78. The components of the planetary gear assembly may be laminated in the center space 41 of the gear mounting part 40. Here, the sun gear 76 may protrude downward from the drive gear 75 and may rotate the planetary gears 77b in engagement therewith. In this case, operation space is defined in a lower surface of the drive gear 75 by being recessed therefrom, so the planetary gears 77b may rotate inside the operation space. Reference numeral 77a may indicate a ring gear 77a surrounding the planetary gears 77b, and may be integrated with or be assembled with the gear mounting part 40 of the main housing 30. Reference numeral 78 may indicate the carrier supporting the planetary gears 77b, and reference numeral 77b' may indicate the rotating shafts of the planetary gears 77b.

Such a structure of the gear part 70 may be provided only as an embodiment, but may be variously modified. For example, the planetary gears 77b of the planetary gear assembly may be configured to have two or three layers, and the first reduction means 73 and 74 may be a simple spur gear structure.

The assembly process of the electronic parking brake actuator assembly of the present invention will be described. First, the brush card assembly 50 may be assembled with the motor mounting part 31 of the main housing 30. The terminal 56 of the brush card assembly 50 may be insert-injected into the main housing 30 to be integrated therewith, so a separate assembly of the terminal 56 with the main housing 30 may not be required. When the brush holder 51 is assembled with the motor mounting part 31, the brush 52 and the elastic member S may be inserted into the brush holder 51.

In addition, during the installation of the choke coil 53, the first end part 53a of the choke coil 53 may be connected to the brush 52, and the second end part 53b of the choke coil 53 may be welded to the protruding part 56c of the terminal 56. Here, the protruding part 56c of the terminal 56 and the second end part 53b of the choke coil 53 may protrude at the upper side of a motor assembly part, so a worker may easily perform the welding of the protruding part 56c and the second end part 53b to each other.

In this state, the motor part 20 may be assembled with the motor mounting part 31. With the stator 23 and the rotor 25 already assembled with each other inside the motor casing 15, the motor part 20 may be fitted to the motor mounting part 31. A separate housing for assembling the motor part 20 may not be required, and may be connected directly to the motor mounting part 31. In this case, as illustrated in FIG. 5, the motor part 20 may be directly assembled with the motor mounting part 31 at the center of the lower installation space, so the commutator 27 of the motor part 20 may be located to face the brush 52. That is, the motor part 20 and the brush card assembly 50 may all be assembled with one main housing 30, so during the assembly of the motor part 20, the motor part 20 and the brush card assembly 50 may also be naturally assembled with each other.

Finally, the gear part 70 may be assembled with the gear mounting part 40 of the main housing 30. The gear part 70 composed of multiple components may not be assembled with a separate housing, but may be directly connected to the main housing 30 as the case of the motor part 20. When the motor gear 71 constituting the gear part 70 and fitted over the rotating shaft 21 of the motor part 20, the first reduction means 73 and 74 composed of the idle gear 74 and the worm gear 73, the drive gear 75, and the planetary gear assembly which is the second reduction means are assembled with the gear mounting part 40, the assembly of the gear part 70 is completed. When the assembly of the gear part 70 is completed, the rotational force of the motor may be transmitted consecutively to the motor gear 71, the first reduction means 73 and 74, the drive gear 75, and the second reduction means (the planetary gear assembly), and may finally be output to the lower space 41' of the gear mounting part 40 through the final output shaft.

Accordingly, in the present invention, the gear part 70 of the actuator assembly may be assembled directly with the main housing 30, and at least a portion of the gear part 70 may be insert-injected into the main housing 30 to be pre-fixed thereto, so assembly tolerances between parts may be reduced, and due to the reduced assembly tolerances, the shaking or noise generation of the parts caused by the rotational force supplied through the final output shaft may be decreased.

Particularly, the parts of the motor part and the gear part may all be installed in the main housing 30, so the assembly of a motor housing or a gear housing with the main housing 30 may not be required, so tolerances which may occur between the housings may also be reduced.

In the above, all the components constituting the electronic parking brake actuator assembly according to the embodiment of the present invention have been described as being combined integrally with each other or operating in combination with each other, the present invention is not necessarily limited to this embodiment but by the scope of the appended claims. All terms, including technical or scientific terms, have the same meaning as commonly understood by those skilled in the art to which the present invention belongs, unless otherwise defined.

## Claims

1. An electronic parking brake actuator assembly comprising:
a main housing (30) constituted by a motor mounting part (31) and a gear mounting part (40) integrated with each other;
a motor part (20) assembled with the motor mounting part (31) of the main housing (30);
a gear part (70) assembled with the gear mounting part (40) of the main housing (30) and rotated in engagement with the motor part (20) by a rotational force of the motor part (20); and
a cover (80) assembled with the main housing (30) and shielding the motor part (20) and the gear part (70),
**characterized in that** a brush card assembly (50) is assembled directly with the motor mounting part (31), a terminal (56) constituting the brush card assembly (50) being insert-injected into the motor mounting part (31).

2. The actuator assembly of claim 1, wherein the brush card assembly (50) comprises:
a brush holder (51) assembled with the motor mounting part (31);
a brush (52) movably inserted to the brush holder (51) and elastically supported by an elastic member (S) in a direction toward a commutator (27) of the motor part (20); and
the terminal (56) insert-injected into the motor mounting part (31) and transmitting external power to the brush (52).

3. The actuator assembly of claim 2, wherein the brush holder (51) and the brush (52) are installed in a lower installation space located at a lower side of the motor mounting part (31), and the motor part (20) is assembled directly with the motor mounting part (31) at a center of the lower installation space, so the commutator (27) of the motor part (20) is located to face the brush (52).

4. The actuator assembly of any one of claims 1 to 3, wherein the terminal (56) comprises:
a connection part (56a) having at least a portion thereof exposed to the connector of the motor mounting part (31) so as to receive external power;
a body part (56b) connected to the connection part (56a) and located inside the motor mounting part (31); and
a protruding part (56c) bent from the body part (56b) and exposed to an outer side of the motor mounting part (31) such that the protruding part (56c) is connected to a choke coil,
wherein the connection part (56a), the body part (56b), and the protruding part (56c) are integrated with each other such that the external power is directly transmitted to the brush (52).

5. The actuator assembly of claim 4, wherein the gear part (70) rotates by receiving the rotational force of the motor part (20) and performs a deceleration function through multiple gears, wherein at least a portion of the gear part (70) is insert-injected into the gear mounting part (40) to be fixed thereto.

6. The actuator assembly of claim 5, wherein the gear part (70) comprises:
a drive gear (75) integrated with the gear mounting part (40) by surrounding an inner surface of the gear mounting part (40) or assembled with the gear mounting part (40) after the drive gear (75) is made as a separate part; and
multiple planetary gears (77) configured to operate in contact with an inner surface of a ring gear.

7. The actuator assembly of claim 5, wherein the main housing (30) comprises:
a frame part extending horizontally;
the motor mounting part (31) formed at a side of the frame part and allowing the motor part (20) to be assembled therewith inside the motor mounting part (31); and
the gear mounting part (40) formed at a side opposite to the motor mounting part (31) of the frame part, the gear mounting part (40) extending in a direction parallel to the motor mounting part (31) and allowing the gear part (70) to be mounted thereto.

## Patentansprüche

1. Eine Aktorbaugruppe für eine elektronische Feststellbremse, die folgende Merkmale aufweist:
ein Hauptgehäuse (30), das durch ein Motormontierteil (31) und ein Getrieberadmontierteil (40) ausgebildet ist, die miteinander integriert sind;
ein Motorteil (20), das mit dem Motormontierteil (31) des Hauptgehäuses (30) zusammengesetzt ist;
ein Getrieberadteil (70), das mit dem Getrieberadmontierteil (40) des Hauptgehäuses (30) zusammengesetzt ist und durch eine Drehkraft des Motorteils (20) in Eingriffnahme mit dem Motorteil (20) gedreht wird; und
eine Abdeckung (80), die mit dem Hauptgehäuse (30) zusammengesetzt ist und das Motorteil (20) und das Getrieberadteil (70) abschirmt,
**dadurch gekennzeichnet, dass** eine Bürstenkartenbaugruppe (50) direkt mit dem Motormontierteil (31) zusammengesetzt ist, wobei ein Anschluss (56), der die Bürstenkartenbaugruppe (50) ausbildet, in das Motormontierteil (31) einlagespritzgegossen ist.

2. Die Aktorbaugruppe gemäß Anspruch 1, wobei die Bürstenkartenbaugruppe (50) folgende Merkmale aufweist:
einen Bürstenhalter (51), der mit dem Motormontierteil (31) zusammengesetzt ist;
eine Bürste (52), die beweglich in den Bürstenhalter (51) eingefügt ist und durch ein elastisches Bauglied (S) in einer Richtung hin zu einem Kommutator (27) des Motorteils (20) elastisch gestützt wird; und
wobei der Anschluss (56) in das Motormontierteil (31) einlagespritzgegossen ist und Fremdstrom an die Bürste (52) überträgt.

3. Die Aktorbaugruppe gemäß Anspruch 2, wobei der Bürstenhalter (51) und die Bürste (52) in einem unteren Installationsraum eingebaut sind, der sich auf einer unteren Seite des Motormontierteils (31) befindet, und das Motorteil (20) direkt mit dem Motormontierteil (31) in einer Mitte des unteren Installationsraums zusammengesetzt ist, so dass der Kommutator (27) des Motorteils (20) derart angeordnet ist, auf die Bürste (52) zu zeigen.

4. Die Aktorbaugruppe gemäß einem der Ansprüche 1 bis 3, wobei der Anschluss (56) Folgendes aufweist:
ein Verbindungsteil (56a), wobei zumindest ein Teil desselben gegenüber dem Verbinder des Motormontierteils (31) freiliegt, um Fremdstrom zu empfangen;
ein Körperteil (56b), das mit dem Verbindungsteil (56a) verbunden ist und sich in dem Motormontierteil (31) befindet; und
ein hervorstehendes Teil (56c), das von dem Körperteil (56b) gebogen ist und gegenüber einer Außenseite des Motormontierteils (31) derart freiliegt, dass das hervorstehende Teil (56c) mit einer Drosselspule verbunden ist,
wobei das Verbindungsteil (56a), das Körperteil (56b) und das hervorstehende Teil (56c) miteinander integriert sind, so dass der Fremdstrom direkt an die Bürste (52) übertragen wird.

5. Die Aktorbaugruppe gemäß Anspruch 4, wobei das Getrieberadteil (70) sich dreht, indem es die Drehkraft des Motorteils (20) empfängt, und eine Verzögerungsfunktion durch mehrere Getrieberäder ausführt, wobei zumindest ein Abschnitt des Getrieberadteils (70) in das Getrieberadmontierteil (40) einlagespritzgegossen ist, um daran befestigt zu sein.

6. Die Aktorbaugruppe gemäß Anspruch 5, wobei das Getrieberadteil (70) Folgendes aufweist:
ein Antriebsgetrieberad (75), das mit dem Getrieberadmontierteil (40) integriert ist, indem es eine innere Oberfläche des Getrieberadmontierteils (40) umgibt, oder mit dem Getrieberadmontierteil (40) zusammengesetzt list, nachdem das Antriebsgetrieberad (75) als separates Teil hergestellt wird; und
mehrere Planetengetrieberäder (77), die dazu konfiguriert sind, in Kontakt mit einer inneren Oberfläche eines Hohlgetrieberades zu arbeiten.

7. Die Aktorbaugruppe gemäß Anspruch 5, wobei das Hauptgehäuse (30) Folgendes aufweist:
ein Rahmenteil, das sich horizontal erstreckt;
das Motormontierteil (31), das an einer Seite des Rahmenteils gebildet ist und es ermöglicht, dass das Motorteil (20) damit innerhalb des Motormontierteils (31) zusammengesetzt wird; und
das Getrieberadmontierteil (40), das an einer Seite gegenüberliegend zu dem Motormontierteil (31) des Rahmenteils gebildet ist, wobei sich das Getrieberadmontierteil (40) in einer Richtung parallel zu dem Motormontierteil (31) erstreckt und es ermöglicht, dass das Getrieberadteil (70) daran montiert wird.

## Revendications

1. Ensemble d'actionneur de frein de stationnement électronique comprenant:
un boîtier principal (30) constitué d'une partie de montage de moteur (31) et d'une partie de montage d'engrenage (40) intégrées l'une dans l'autre;
une partie de moteur (20) assemblée avec la partie de montage de moteur (31) du boîtier principal (30);
une partie d'engrenage (70) assemblée avec la partie de montage d'engrenage (40) du boîtier principal (30) et mise en rotation en prise avec la partie de moteur (20) par une force de rotation de la partie de moteur (20); et
un couvercle (80) assemblé au boîtier principal (30) et protégeant la partie de moteur (20) et la partie d'engrenage (70),
**caractérisé par le fait qu'**un ensemble de carte à balais (50) est assemblé directement avec la partie de montage de moteur (31), une borne (56) constituant l'ensemble de carte à balais (50) étant injectée par insertion dans la partie de montage de moteur (31).

2. Ensemble d'actionneur selon la revendication 1, dans lequel l'ensemble de carte à balais (50) comprend:
un porte-balais (51) assemblé à la partie de montage de moteur (31);
un balai (52) inséré de manière mobile dans le porte-balais (51) et supporté de manière élastique par un élément élastique (S) dans une direction vers un collecteur (27) de la partie de moteur (20); et
la borne (56) injectée par insertion dans la partie de montage de moteur (31) et transmettant du courant externe au balai (52).

3. Ensemble d'actionneur selon la revendication 2, dans lequel le porte-balai (51) et le balai (52) sont installés dans un espace d'installation inférieur situé d'un côté inférieur de la partie de montage de moteur (31), et la partie de moteur (20) est assemblée directement avec la partie de montage de moteur (31) au centre de l'espace d'installation inférieur, de sorte que le collecteur (27) de la partie de moteur (20) soit situé de manière à faire face au balai (52).

4. Ensemble d'actionneur selon l'une quelconque des revendications 1 à 3, dans lequel la borne (56) comprend:
une partie de connexion (56a) présentant au moins une partie qui est exposée au connecteur de la partie de montage de moteur (31) de manière à recevoir du courant externe;
une partie de corps (56b) connectée à la partie de connexion (56a) et située à l'intérieur de la partie de montage de moteur (31); et
une partie en saillie (56c) recourbée à partir de la partie de corps (56b) et exposée à un côté extérieur de la partie de montage de moteur (31) de sorte que la partie en saillie (56c) soit connectée à une bobine d'étranglement,
dans lequel la partie de connexion (56a), la partie de corps (56b) et la partie en saillie (56c) sont intégrées l'une dans l'autre de sorte que le courant externe soit directement transmis au balai (52).

5. Ensemble d'actionneur selon la revendication 4, dans lequel la partie d'engrenage (70) tourne en recevant la force de rotation de la partie de moteur (20) et réalise une fonction de décélération à travers plusieurs engrenages, dans lequel au moins une partie de la partie d'engrenage (70) est injectée par insertion dans la partie de montage d'engrenage (40) pour y être fixée.

6. Ensemble d'actionneur selon la revendication 5, dans lequel la partie d'engrenage (70) comprend:
un engrenage d'entraînement (75) intégré dans la partie de montage d'engrenage (40) en entourant une surface intérieure de la partie de montage d'engrenage (40) ou assemblé avec la partie de montage d'engrenage (40) après que l'engrenage d'entraînement (75) soit réalisé comme une partie séparée; et
de multiples engrenages planétaires (77) configurés pour fonctionner en contact avec une surface intérieure d'une couronne dentée.

7. Ensemble d'actionneur selon la revendication 5, dans lequel le boîtier principal (30) comprend:
une partie de cadre s'étendant horizontalement;
la partie de montage de moteur (31) formée sur un côté de la partie de cadre et permettant que la partie de moteur (20) soit assemblée avec cette dernière à l'intérieur de la partie de montage de moteur (31); et
la partie de montage d'engrenage (40) formée sur un côté opposé à la partie de montage de moteur (31) de la partie cadre, la partie de montage d'engrenage (40) s'étendant dans une direction parallèle à la partie de montage de moteur (31) et permettant que la partie d'engrenage (70) y soit montée.
